# EUROPEAN PATENT APPLICATION

(11) **EP 2 743 048 A2**
(43) Date of publication of application: **18.06.2014**
(21) Application number: 12822849.1
(22) Date of filing: 03.08.2012
(51) Int. Cl.: B27D 5/00, B27M 3/18, A47B 96/20

(54) **METHOD FOR FORMING PATTERN ON SURFACE OF BOARD AND PATTERN-FORMED BOARD FORMED BY METHOD**

(30) Priority: 08.08.2011 KR 20110078807
(71) Applicant: Lee, Sang Geun, Gwangju-si, Gyeonggi-do 464-873 (KR)
(72) Inventor: Lee, Sang Geun, Gwangju-si, Gyeonggi-do 464-873 (KR)
(74) Representative: Grünecker, Kinkeldey, Stockmair & Schwanhäusser
(86) International application number: PCT/KR2012/006182
(87) International publication number: WO 2013/022229

(57) **Abstract**

Disclosed herein are a method for forming a pattern on a surface of a board and a pattern-formed board manufactured by the method. The method includes: arranging hot-fix pieces (10) in a predetermined form, thus forming a hot-fix-piece pattern unit (100); maintaining the hot-fix-piece pattern unit (100) and temporarily-adhering temporary adhesive tape to dome-shaped parts (10c) of the hot-fix pieces (10) of the hot-fix-piece pattern unit (100); disposing adhesive layers (10b) of the hot-fix pieces (10) of the hot-fix-piece pattern unit (100) and applying heat to the thin plate (12) so that the adhesive layers (10b) of the hot-fix pieces (10) are attached to the thin plate (12); applying an adhesive to a rear surface of the thin plate (12) and attaching the thin plate (12) to an opening and closing board (13); and surface-treating the opening and closing board (13).

## Description

### Technical Field

The present invention relates, in general, to methods for forming patterns on surfaces of boards and pattern-formed boards formed by the methods and, more particularly, to a method for forming a pattern on a surface of a board and a pattern-formed board formed by the method, by which hot-fix pieces can be attached to the surface of an opening and closing board used as a door for a wardrobe, a drawer or a sink, thus forming a high-class decorative pattern so that it can be recognized as a high-quality product, wherein because even a complex pattern can be easily and rapidly formed, the labor productivity can be markedly enhanced, it becomes possible to produce high-quality products with low cost, and forming a pattern even on a wooden, synthetic resin or metal board can be facilitated.

### Background Art

Generally, among high-class wardrobes for household use, wardrobes inlaid with a lot of mother-of-pearl in various forms are recognized as being very expensive. In such a wardrobe inlaid with mother-of-pearl, a complex decorative pattern is formed on the surface of an opening and closing board which opens or closes the wardrobe. The price of the wardrobe inlaid with mother-of-pearl is determined depending on elaboration of the decorative pattern formed on the surface of the opening and closing board or the skill level of a worker.

However, formation of a decorative pattern on the opening and closing board of the wardrobe inlaid with mother-of-pearl is labor intensive, in other words, requires large labor force. In addition, processing a lot of mother-of-pearl in desired shapes needs a high skill level and large labor force. Thus, it takes a lot of time to manufacture the wardrobe inlaid with mother-of-pearl. Therefore, the production cost is increased. Consumers who afford such expensive products are limited.

Meanwhile, doors of sinks or opening and closing boards of drawers are typically manufactured in simple forms without having a special pattern. To provide a pattern for a decorative effect, patterned transfer paper is mainly used in such a way that it is attached to the surface of a door of a sink, a drawer or wardrobe. However, the pattern formed using such transfer paper discolors or peels as time passes, thus deteriorating the value of the product.

Typically, hot-fix pieces have been used as reflectors, which are attached to expensive clothes to provide a glittering effect. The diameter of hot-fix pieces ranges from 1 mm to 10 mm or over. Generally, such a hot-fix piece is manufactured as follows: a circular plate of 5 mm or another variously shaped plate, e.g., an elliptical or rectangular shaped plate, is formed by punching an aluminum or acryl plate; a reflective layer is formed on an upper surface of the aluminum plate formed by punching; an adhesive layer is formed under the aluminum plate; and an dome-shaped part is formed by dropping epoxy resin onto the reflective layer. A plurality of hot-fix pieces which are manufactured by the above-mentioned method are arranged in a predetermined character or figure form, thus forming a hot-fix piece pattern plate. The hot-fix piece pattern plate is attached to a cloth so that when light or beams irradiate it, glittering effects are created. Such hot-fix piece pattern plates are mainly used on high-priced clothes of popular entertainers or wealthy people. In the early stages, hot-fix piece pattern plates were simple single color characters or figures. As technology developed, a variety of marks or shapes of hot-fix piece pattern plates having five or more colors and five or more kinds of sizes, for example, a dragon-shaped hot-fix piece pattern plate, can now be made. As such, hot-fix piece pattern plates are being developed in such a way that various colors can be used and the shape and size thereof are complex and diversified. However, such conventional hot-fix piece pattern plates can be used on only high-priced clothes but cannot be used for general consumers or for other purposes. In addition, customers are limited to only wealthy people.

### Disclosure

### Technical Problem

Accordingly, the present invention has been made keeping in mind the above problems occurring in the prior art, and an object of the present invention is to provide a method for forming a pattern on a surface of a board and a pattern-formed board formed by the method, by which a decorative pattern using hot-fix pieces can be attached to the surface of an opening and closing board used as a door for a wardrobe, a drawer, a sink or a desk, wherein because even a complex pattern can be easily and rapidly formed, the labor productivity can be markedly enhanced, and even an unskilled worker can easily form complex patterns, making it possible to shorten manufacturing lead time, and manufacture high-quality products at relatively low production cost.

### Technical Solution

In order to accomplish the above object, in an aspect, the present invention provides a method for forming a pattern on a surface of a board, including: arranging a plurality of hot-fix pieces in a predetermined form, thus forming a hot-fix-piece pattern unit; maintaining the hot-fix-piece pattern unit that has the hot-fix pieces arranged in the predetermined form, and temporarily-adhering temporary adhesive tape to dome-shaped parts of the hot-fix pieces of the hot-fix-piece pattern unit such that the hot-fix pieces of the hot-fix-piece pattern unit are arranged in an opposite form; disposing adhesive layers of the hot-fix pieces of the hot-fix-piece pattern unit temporarily-adhered to the temporary adhesive tape on a thin plate, and applying heat to the thin plate so that the adhesive layers of the hot-fix pieces are attached to the thin plate, whereby the hot-fix-piece pattern unit is attached to the thin plate; applying an adhesive to a rear surface of the thin plate to which the hot-fix-piece pattern unit has been attached, and attaching the thin plate to an opening and closing board; and surface-treating the opening and closing board to which the thin plate has been attached.

In another aspect, the present invention provides a pattern-formed board manufactured by the pattern forming method, the pattern-formed board including: a board; a thin plate adhering to the board; and a hot-fix-piece pattern unit adhering to the thin plate and arranged in a predetermined form.

In a further aspect, the present invention provides a pattern-formed thin plate, including: a thin plate; and a hot-fix-piece pattern unit adhering to the thin plate and arranged in a predetermined form.

### Advantageous Effects

The present invention provides a method for forming a pattern on a surface of a board and a pattern-formed board manufactured by the method. The method according to the present invention includes: arranging a plurality of hot-fix pieces in a predetermined form, thus forming a fix pattern unit; maintaining the hot-fix-piece pattern unit that has the hot-fix pieces arranged in the predetermined form, and temporarily-adhering temporary adhesive tape to dome-shaped parts of the hot-fix pieces of the hot-fix-piece pattern unit such that the hot-fix pieces of the hot-fix-piece pattern unit are arranged in an opposite form; disposing adhesive layers of the hot-fix pieces of the hot-fix-piece pattern unit temporarily-adhered to the temporary adhesive tape on a thin plate, and applying heat to the thin plate so that the adhesive layers of the hot-fix pieces are attached to the thin plate, whereby the hot-fix-piece pattern unit is attached to the thin plate; applying an adhesive to a rear surface of the thin plate to which the hot-fix-piece pattern unit has been attached, and attaching the thin plate to an opening and closing board; and surface-treating the opening and closing board to which the thin plate has been attached. The present invention enables decorative patterns using hot-fix pieces to be formed on the surface of opening and closing boards used as doors for wardrobes, drawers, sinks or desks, thereby improving labor productivity since even complicated decorative patterns can be easily formed. The present invention also enables even an unskilled worker to easily form complex patterns, thereby making it possible to shorten manufacturing lead time, manufacture high-quality products, and inexpensively and quickly manufacture products.

### Description of Drawings

Fig. 1 is a flowchart of a method for forming a pattern on a surface of a board, according to a first embodiment of the present invention;
Fig. 2 is a longitudinal sectional view of a hot-fix piece;
Fig. 3 is a perspective view of a pattern-formed board manufactured by the pattern forming method according to the first embodiment of the present invention;
Fig. 4a is a photograph a first embodiment of a hot-fix-piece pattern unit attached to a thin plate according to the present invention;
Fig. 4b is a photograph showing a second embodiment of a hot-fix-piece pattern unit attached to a thin plate according to the present invention; and

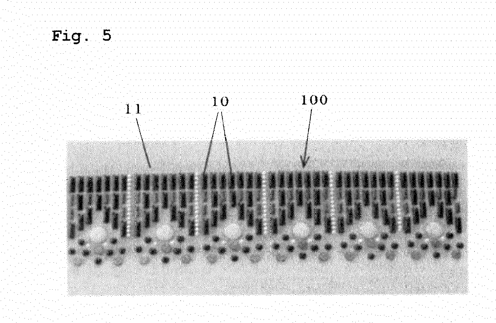

Fig. 5 is a photograph showing a hot-fix-piece pattern unit adhered on temporary adhesive tape according to the present invention.

### Best Mode

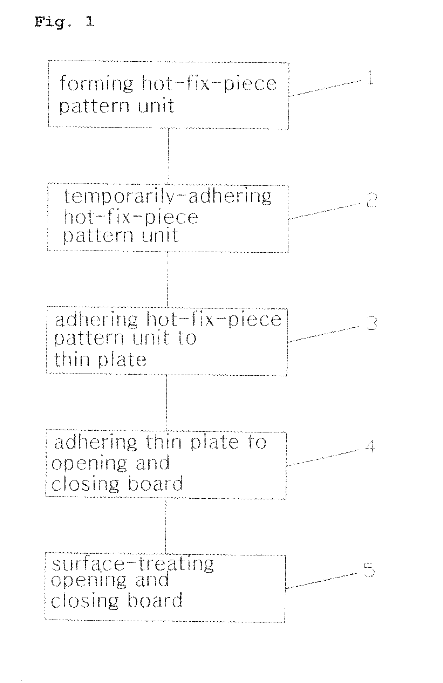

As shown in Fig. 1, a method for forming a pattern on a surface of a board according to a first embodiment of the present invention includes step 1 of arranging a plurality of hot-fix pieces in a predetermined form and forming a fix pattern unit; step 2 of maintaining the hot-fix-piece pattern unit, which has the hot-fix pieces arranged in a predetermined form, and temporarily-adhering temporary adhesive tape to dome-shaped parts of the hot-fix pieces of the hot-fix-piece pattern unit such that the hot-fix pieces of the hot-fix-piece pattern unit are arranged in an opposite form; step 3 of disposing adhesive layers of the hot-fix pieces of the hot-fix-piece pattern unit temporarily-adhered to the temporary adhesive tape on a thin plate made of such as wood and applying heat to the thin plate so that the adhesive layers of the hot-fix pieces are attached to the thin plate, whereby the hot-fix-piece pattern unit is attached to the thin plate; step 4 of applying an adhesive to a rear surface of the thin plate to which the hot-fix-piece pattern unit has been attached and attaching the thin plate to an opening and closing board; and step 5 of surface-treating the opening and closing board to which the thin plate has been attached.

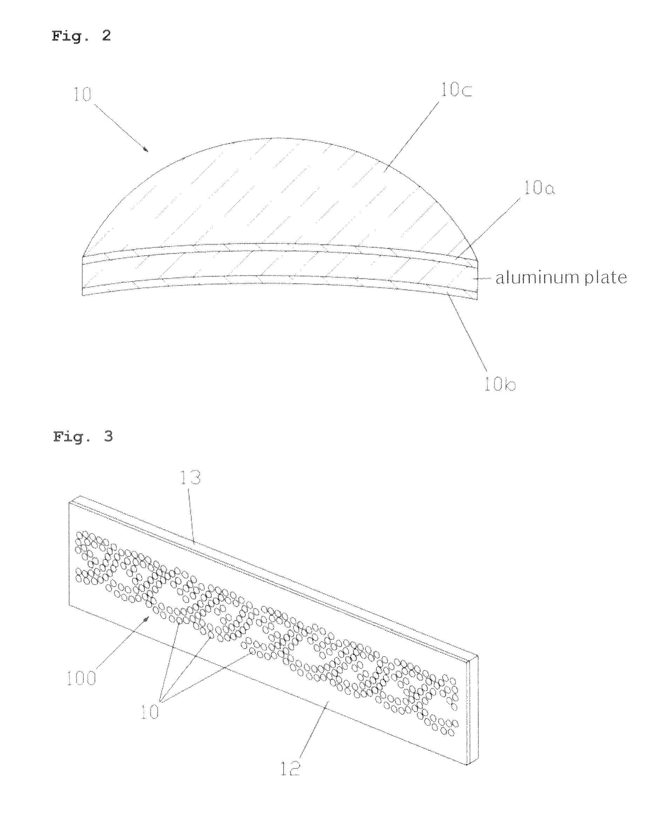

A hot-fix piece which has a diameter ranging from 1 mm to 10 mm or over may be used as the hot-fix piece 10. Preferably, as shown in Fig. 2, each hot-fix piece 10 is manufactured as follows: a circular plate of 5 mm or another variously shaped plate, e.g., an elliptical or rectangular shaped plate, is formed by punching an aluminum or acryl plate; a reflective layer 10a is formed on an upper surface of the aluminum plate formed by punching; an adhesive layer 10b is formed under the aluminum plate; and an dome-shaped part 10c is formed by dropping epoxy resin onto the reflective layer 10a. However, the method of manufacturing the hot-fix piece 10 is not limited to this. For example, in lieu of epoxy resin, using a similar adhesive such as polypropylene also falls within the bounds of the present invention.

A hot-melt adhesive is used in the adhesive layer 10b. The hot-melt adhesive is melted when it is heated to about 130°C, and it is hardened at room temperature. That is, after the hot-melt adhesive has been melted by heating, it is adhered to a thin plate 12. Thereafter, when the hot-melt adhesive is hardened at room temperature, it is attached to and maintained on the thin plate 12. In addition to such a hot-melt adhesive, other different kinds of adhesives which are hardened at room temperature and are melted when heated can also be used.

Although typical transparent vinyl tape that has a width of 6 cm or more is used as the temporary adhesive tape 11, the width thereof is not limited. In other words, the width of the temporary adhesive tape 11 may be greater or less than that of this embodiment. It is preferable that the temporary adhesive tape 11 be transparent or semi-transparent to make it possible to confirm whether the adhesion of the hot-fix-piece pattern unit 100 is correctly carried out. Here, the term 'temporary adhesion' of the temporary adhesive tape 11 must be distinguished from the term 'adhesion'. The term 'temporary adhesion' means providing comparatively low adhesive force to merely maintain the form of arrangement of the hot-fix pieces 10 of the hot-fix-piece pattern unit 100 and not to change the appearance of the hot-fix pieces 10 when the temporary adhesive tape is removed from the hot-fix-piece pattern unit 100. Therefore, the term 'temporary adhesion' is used differently from the term 'adhesion' which means that the hot-fix pieces 10 are permanently fixed.

In this embodiment, although a thin wooden plate that has a thickness of 0.1 mm is used as the thin plate 12, a thin metal plate made of metal such as gold or silver can also be used as the thin plate 12. In addition, a nonflammable synthetic resin plate that has a smooth surface can also be used as the thin plate 12.

After an adhesive such as glue is applied to the rear surface of the thin plate 12, it adheres to the surface of the opening and closing board 13. Surface-treatment such as varnishing or lacquering is applied to the surface of the opening and closing board 13 to which the thin plate 12 has been adhered, thus completing the opening and closing board 13 as a finished product. The completed opening and closing board 13 is used as a door or the like which is its intended purpose.

Furthermore, in the case of the thin metal plate 12, it may be fixed to the opening and closing board 13 in such a way that edges of the thin plate 12 are inserted into the opening and closing board 13 without application of an adhesive.

The surface treatment of the opening and closing board 13 shows the texture of the raw material such as wood and is conducted in such a way that transparent paint is applied thereto and opaque paint such as lacquer is thereafter applied thereto to provide the same effect as that of varnishing with lacquer.

As shown in Fig. 3, the pattern-formed board B manufactured by the pattern forming method according to the first embodiment of the present invention includes the opening and closing board 13 which is a surface-treated wood board, the thin plate 12 which adheres to the opening and closing board 13, and the hot-fix-piece pattern unit 100 which adheres to the thin plate 12 and has the hot-fix pieces 10 that are arranged in a predetermined form. Here, as stated above, the hot-fix-piece pattern unit 100 which can have a variety of patterns can adhere to the surface of the opening and closing board 13, because the adhesive layers 10b formed on the rear surfaces of the hot-fix pieces 10 are easily changed into a melted phase by heating.

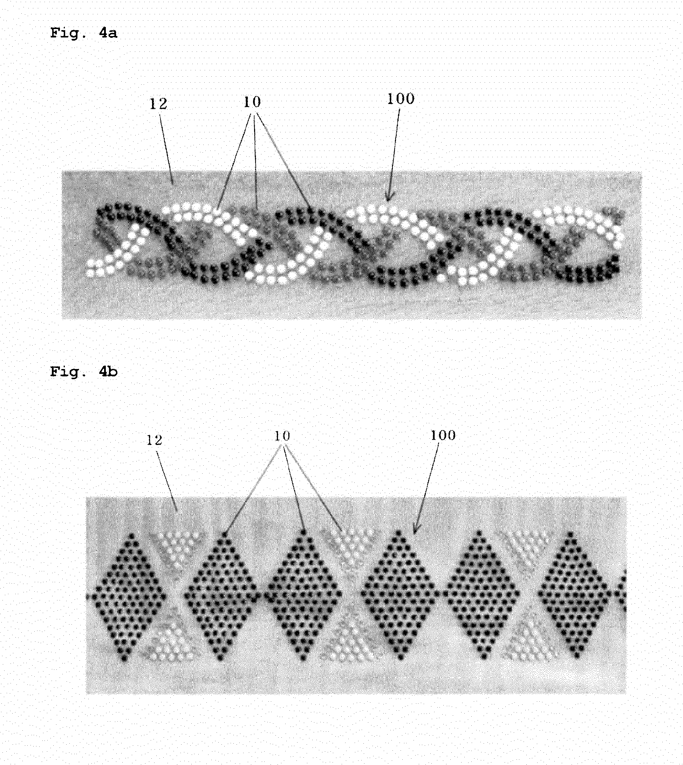

In this embodiment, as shown in Fig. 4a, although the hot-fix-piece pattern unit 100 attached to the thin plate 12 is illustrated as being configured such that black, gray and white hot-fix pieces 10 are arranged in a straw rope form, the hot-fix-piece pattern unit 100 can be formed in another form, for example, in a form shown in Fig. 4b. Furthermore, of course, the hot-fix-piece pattern unit 100 can be formed in other various forms.

With regard to the thin plate 12 to which the hot-fix-piece pattern unit 100 of various forms is attached and which is provided to attach the hot-fix-piece pattern unit 100 to the opening and closing board 13, large quantities of thin plates 12 are manufactured and supplied as separate products to different sources of demand such as wardrobes, sinks, and so on.

As described above, the thin plate 12, to which the hot-fix-piece pattern unit 100 is attached, is manufactured by the method including: forming the hot-fix-piece pattern unit 100 in which the hot-fix pieces 10 are arranged in a predetermined form; maintaining the hot-fix-piece pattern unit 100, which has the hot-fix pieces 10 arranged in a predetermined form, and temporarily-adhering the temporary adhesive tape 11 to the dome-shaped parts 10c of the hot-fix pieces 10 of the hot-fix-piece pattern unit 100 such that the hot-fix pieces 10 of the hot-fix-piece pattern unit 100 are arranged in an opposite form; and disposing the adhesive layers 10b of the hot-fix pieces 10 of the hot-fix-piece pattern unit 100 temporarily-adhered to the removable adhesive tape 11 on the thin plate 12 and applying heat to the thin plate 12 so that the adhesive layers 10b of the hot-fix pieces 10 are attached to the thin plate 12, whereby the hot-fix-piece pattern unit 100 is attached to the thin plate 12. Manufactured by the above method, large quantities of thin plates 12, each to which the hot-fix-piece pattern unit 100 is attached, are supplied as separate products to different sources of demand such as wardrobes, sinks, etc.

In the description of the present invention, although the opening and closing board which opens or closes the interior of an object has been illustrated as an example, the present invention is not limited to this. That is, it must be understood that the present invention can also be applied to a typical panel such as a decorative panel which is attached to a wall.

### Industrial Applicability

As described above, the present invention provides a method for forming a pattern on a surface of a board and a pattern-formed board formed by the method. The present invention can be adapted to mass production in board processing factories, manufacturing factories making panels, etc. Therefore, the present invention must be regarded as having high industrial applicability.

## Claims

1. A method for forming a pattern on a surface of a board, comprising:
arranging a plurality of hot-fix pieces (10) in a predetermined form, thus forming a hot-fix-piece pattern unit (100);
maintaining the hot-fix-piece pattern unit (100) that has the hot-fix pieces (10) arranged in the predetermined form, and temporarily-adhering temporary adhesive tape to dome-shaped parts (10c) of the hot-fix pieces (10) of the hot-fix-piece pattern unit (100) such that the hot-fix pieces (10) of the hot-fix-piece pattern unit (100) are arranged in an opposite form;
disposing adhesive layers (10b) of the hot-fix pieces (10) of the hot-fix-piece pattern unit (100) temporarily-adhered to the temporary adhesive tape (11) on a thin plate (12), and applying heat to the thin plate (12) so that the adhesive layers (10b) of the hot-fix pieces (10) are attached to the thin plate (12), whereby the hot-fix-piece pattern unit (100) is attached to the thin plate (12);
applying an adhesive to a rear surface of the thin plate (12) to which the hot-fix-piece pattern unit (100) has been attached, and attaching the thin plate (12) to an opening and closing board (13); and
surface-treating the opening and closing board (13) to which the thin plate (12) has been attached.

2. A method for forming a pattern on a surface of a thin plate, comprising:
arranging a plurality of hot-fix pieces (10) in a predetermined form, thus forming a fix pattern unit (100);
maintaining the hot-fix-piece pattern unit (100) that has the hot-fix pieces (10) arranged in the predetermined form, and temporarily-adhering temporary adhesive tape to dome-shaped parts (10c) of the hot-fix pieces (10) of the hot-fix-piece pattern unit (100) such that the hot-fix pieces (10) of the hot-fix-piece pattern unit (100) are arranged in an opposite form; and
disposing adhesive layers (10b) of the hot-fix pieces (10) of the hot-fix-piece pattern unit (100) temporarily-adhered to the temporary adhesive tape (11) on a thin plate (12), and applying heat to the thin plate (12) so that the adhesive layers (10b) of the hot-fix pieces (10) are attached to the thin plate (12), whereby the hot-fix-piece pattern unit (100) is attached to the thin plate (12).

3. A pattern-formed board manufactured by the method of claim 1, the pattern-formed board comprising:
a board (13);
a thin plate (12) adhering to the board (13); and
a hot-fix-piece pattern unit (100) adhering to the thin plate (12) and arranged in a predetermined form.

4. A pattern-formed thin plate manufactured by the method of claim 2, the pattern-formed thin plate comprising:
a thin plate (12); and
a hot-fix-piece pattern unit (100) adhering to the thin plate (12) and arranged in a predetermined form.

5. The pattern-formed thin plate of claim 4, wherein the thin plate (12) comprises one selected from among a thin wooden plate, a thin metal plate and a thin synthetic resin plate.
